# EUROPÄISCHE PATENTSCHRIFT

(11) **EP 3 323 695 B1**
(45) Veröffentlichungstag und Bekanntmachung des Hinweises auf die Patenterteilung: **15.05.2019**
(21) Anmeldenummer: 17198350.5
(22) Anmeldetag: 25.10.2017
(51) Int. Cl.: B62D 6/00

(54) **ELEKTROMECHANISCHE LENKUNG UND VERFAHREN ZUM STEUERN EINER ELEKTROMECHANISCHEN LENKUNG**
ELECTROMECHANICAL STEERING AND METHOD FOR CONTROLLING AN ELECTROMECHANICAL STEERING SYSTEM
DIRECTION ÉLECTROMÉCANIQUE ET PROCÉDÉ DE COMMANDE D'UNE DIRECTION ÉLECTROMÉCANIQUE

(30) Priorität: 22.11.2016 DE 102016222985
(43) Veröffentlichungstag der Anmeldung: 23.05.2018
(73) Patentinhaber: VOLKSWAGEN AKTIENGESELLSCHAFT, 38440 Wolfsburg (DE)
(72) Erfinder: Dreyer, Dirk, 31655 Stadthagen (DE)

(56) Entgegenhaltungen:
- DE-A1-102010 024 171

## Beschreibung

Die Erfindung betrifft eine elektromechanische Lenkung und ein Verfahren zum Steuern einer elektromechanischen Lenkung für ein Kraftfahrzeug.

Elektromechanische Lenkungen für Kraftfahrzeuge umfassen ein Steuergerät und einen elektrischen Servomotor, wobei das Steuergerät in Abhängigkeit von Eingangsgrößen ein Unterstützungsmoment und ein Rückstellmoment für den Servomotor berechnet. Eingangsgrößen sind beispielsweise ein Handdrehmoment an einer Lenkhandhabe und die Fahrzeuggeschwindigkeit. Eine weitere Eingangsgröße kann beispielsweise die Temperatur sein, um Reibung der Lenkung zu kompensieren. Das Rückstellmoment bewirkt dabei, dass ohne Handmoment sich die Lenkung in eine Mittenstellung bzw. Neutralstellung zurückstellt.

Aus der DE 10 2011 079 859 A1 ist ein Betriebsverfahren eines Fahrzeug-Lenksystems mit elektromotorischer Lenkmoment-Unterstützung bekannt, wobei Einflüsse aus dem über die lenkbaren Fahrzeug-Räder übertragenen Antriebsmoment des Fahrzeug-Antriebsaggregats kompensiert werden und das hierfür benötigte elektromotorische Kompensationsmoment aus einem Vergleich einer Istgröße mit einer Sollgröße bestimmt wird. Für relevante Betriebspunkte des Fahrzeugs, in denen eine solche Kompensation durchgeführt wird, ist ein Soll-Lenkmoment in Abhängigkeit von relevanten Randbedingungen hinterlegt, wobei bei einer eine Schwelle überschreitenden Abweichung des gemessenen Ist-Lenkmoments vom Soll-Lenkmoment für die Kompensation des Störeinflusses über eine elektrische Steuereinheit für den die Lenkmomentunterstützung bereitstellenden Elektromotor ein zusätzliches Lenkmoment solcher Größe von diesem Elektromotor angefordert und bereitgestellt wird, dass sich das Ist-Lenkmoment um nicht mehr als die genannte Schwelle vom Soll-Lenkmoment unterscheidet. Weiter ist ein multiplikativer Korrekturfaktor für die Anpassung des Soll-Lenkmoments an den Reibwert der Fahrbahnoberfläche oder an eine systemspezifische Abweichung vorgesehen.

Weiterhin offenbart die DE 10 2010 024 171 A1 als nächstliegender Stand der Technik in Bezug auf den unabhängigen Anspruch 1 eine elektromechanische Lenkung für ein Kraftfahrzeug, umfassend mindestens ein Steuergerät und einen elektrischen Servomotor, wobei das Steuergerät derart ausgebildet ist, in Abhängigkeit von Eingangsgrößen ein Unterstützungsmoment und ein Rückstellmoment für den Servomotor zu berechnen, wobei das Steuergerät derart ausgebildet ist, dass bei einem Übersteuern des Kraftfahrzeugs eine Verstärkung des Rückstellmoments in Abhängigkeit des Grades der Übersteuerung angepasst wird und ein Offset-Winkel zu einer Neutralstellung bestimmt wird, auf den die Rückstellung der Lenkung erfolgt, sowie in Bezug auf den unabhängigen Anspruch 4 ein Verfahren zum Steuern einer elektromechanischen Lenkung für ein Kraftfahrzeug, mittels eines Steuergeräts und eines elektrischen Servomotors, wobei das Steuergerät in Abhängigkeit von Eingangsgrößen ein Unterstützungsmoment und ein Rückstellmoment für den Servomotor berechnet, wobei das Steuergerät bei einem Übersteuern des Kraftfahrzeugs eine Verstärkung des Rückstellmoments in Abhängigkeit des Grades der Übersteuerung anpasst und einen Offset-Winkel zu einer Neutralstellung bestimmt, auf den die Rückstellung der Lenkung erfolgt.

Ein Problem von elektromechanischen Lenkungen ist, dass aufgrund der hohen Dämpfung die Fahrbahn-Rückmeldung nicht sehr ausgeprägt ist.

Der Erfindung liegt daher das technische Problem zugrunde, eine elektromechanische Lenkung für ein Kraftfahrzeug zu schaffen, bei der situativ eine verbesserte Fahrbahn-Rückmeldung an den Kraftfahrzeugführer realisiert werden kann. Ein weiteres technisches Problem ist das Zurverfügungstellen eines geeigneten Verfahrens zur Steuerung einer elektromechanischen Lenkung.

Die Lösung des technischen Problems ergibt sich durch eine elektromechanische Lenkung mit den Merkmalen des Anspruchs 1 sowie ein Verfahren mit den Merkmalen des Anspruchs 4. Weitere vorteilhafte Ausgestaltungen der Erfindung ergeben sich aus den Unteransprüchen.

Die elektromechanische Lenkung für ein Kraftfahrzeug umfasst mindestens ein Steuergerät und einen elektrischen Servomotor, wobei das Steuergerät derart ausgebildet ist, in Abhängigkeit von Eingangsgrößen ein Unterstützungsmoment und ein Rückstellmoment für den Servomotor zu berechnen. Die Berechnung kann dabei beispielsweise mittels Kennlinien oder Kennfeldern erfolgen. Dabei ist das Steuergerät derart ausgebildet, dass bei einem Übersteuern des Kraftfahrzeugs eine Verstärkung des Rückstellmoments in Abhängigkeit des Grades der Übersteuerung und eines Reibwertes der Fahrbahn-Oberfläche angepasst wird und ein Offset-Winkel zu einer Neutralstellung bestimmt wird, auf den die Rückstellung der Lenkung erfolgt. Hierdurch kann das Verhalten der elektromechanischen Lenkung an eine rein mechanische Lenkung im Fall des Übersteuerns angepasst werden. Unter einem Übersteuern wird dabei eine Fahrsituation verstanden, wo der Schräglaufwinkel der Vorderräder kleiner als der Schräglaufwinkel der Hinterräder ist. Übersteuern bezeichnet dabei anschaulich ein Fahrzeug, das in einer Kurve dazu tendiert, mit dem Heck auszubrechen. Durch die Anpassung des Rückstellmoments kann dem Fahrer eine entsprechende haptische Rückmeldung gegeben werden. Die Berücksichtigung der Reibung trägt dabei den unterschiedlichen Seitenkräften aufgrund der Reibung Rechnung. Im Fall des Übersteuerns hat eine mechanische Lenkung die Tendenz, den Lenkwinkel in Richtung des Schwimmwinkels anzupassen. Diesem Verhalten wird durch den Offset-Winkel Rechnung getragen. Somit verhält sich die Lenkung, wie dies der Kraftfahrzeugführer erwartet. Im Regelfall wird dabei die Anpassung zu einer Vergrößerung des Rückstellmoments bei höherem Grad der Übersteuerung oder größerem Reibwert führen (bei ansonsten gleichen Eingangsgrößen).

Vorzugsweise wird die Information des Übersteuern sowie der Reibwert der Fahrbahn-Oberfläche von einem elektronischen Stabilitätsprogramm zur Verfügung gestellt, da dieses das Übersteuern ohnehin ermittelt und kompensiert. Beispielsweise wird das Übersteuern aus einer Gierratendifferenz ermittelt, wobei die eine Gierrate anhand eines Fahrzeugmodells und eine andere Gierrate sensorisch erfasst wird. Alternativ kann dies auch aus einem Schwimmwinkel hergeleitet werden.

In einer Ausführungsform ist das Steuergerät weiter derart ausgebildet, dass bei einem Untersteuern des Kraftfahrzeugs eine Verstärkung des Unterstützungsmoments in Abhängigkeit des Grades der Untersteuerung und eines Reibwertes der Fahrbahnoberfläche angepasst wird. Beim Untersteuern ist der Schräglaufwinkel der Vorderräder größer als der Schräglaufwinkel der Hinterräder. Dabei gilt, dass bei ansonsten gleichen Eingangsgrößen das Unterstützungsmoment vergrößert wird und sich die Lenkung entsprechend leichtgängiger anfühlt. Zusätzlich kann dabei vorgesehen sein, dass auch die Verstärkung für das Rückstellmoment angepasst wird.

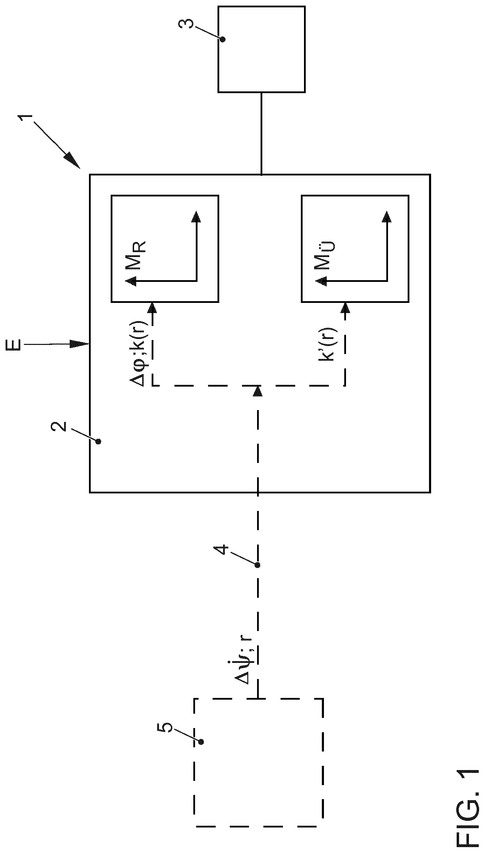

Die Erfindung wird nachfolgend anhand eines bevorzugten Ausführungsbeispiels näher erläutert. Die einzige Figur zeigt ein schematisches Blockschaltbild einer elektromechanischen Lenkung eines Kraftfahrzeugs.

Die elektromechanische Lenkung 1 umfasst ein Steuergerät 2 sowie einen elektrischen Servomotor 3, wobei das Steuergerät Ansteuergeräte für eine nicht näher dargestellte Leistungselektronik für den Servomotor 3 ermittelt. Das Steuergerät 2 empfängt Eingangssignale E wie beispielsweise ein Handmoment an einer nicht dargestellten Lenkhandhabe und die Fahrzeuggeschwindigkeit. Diese Eingangssignale E können direkt dem Steuergerät 2 zugeführt werden und über ein Bussystem. Weiter ist das Steuergerät 2 über ein Bussystem 4 mit einem elektronischen Stabilitätsprogramm 5 verbunden. Von dem elektronischen Stabilitätsprogramm 5 erhält das Steuergerät 2 die Information, ob das Kraftfahrzeug über- oder untersteuert, sowie einen Reibwert r einer aktuell befahrenen Fahrbahn-Oberfläche. Die Information über das Über- bzw. Untersteuern des Kraftfahrzeugs ermittelt das elektronische Stabilitätsprogramm 5 beispielsweise anhand einer Gierratendifferenz Δ*ψ̇* zwischen einer ermittelten Soll-Gierrate anhand eines Fahrzeugmodells und einer Ist-Gierrate, die sensorisch erfasst wird. In das Fahrzeugmodell gehen dabei verschiedene Fahrparameter wie Lenkwinkel und Fahrzeuggeschwindigkeit ein.

In dem Steuergerät 2 wird sowohl ein Unterstützungsmoment M_{Ü} als auch ein Rückstellmoment M_{R} des Servomotors 3 berechnet.

Im Falle des Übersteuerns berechnet das Steuergerät 2 einen Offset-Winkel Δ*ϕ* auf die Rückstellfunktion sowie eine Verstärkung k für die Rückstellfunktion, wobei die Verstärkung in Abhängigkeit der Reibung r angepasst wird, um das Gefühl der Fahrbahnrückmeldung zu verbessern.

Im Falle des Untersteuerns berechnet das Steuergerät 2 eine Verstärkung k' der Lenkmomentunterstützung M_{Ü}, um eine veränderte Seitenkraft darzustellen, wobei diese Verstärkung k' in Abhängigkeit der Reibung r angepasst wird, um das Fahrbahngefühl zu verbessern.

## Patentansprüche

1. Elektromechanische Lenkung (1) für ein Kraftfahrzeug, umfassend mindestens ein Steuergerät (2) und einen elektrischen Servomotor (3), wobei das Steuergerät (2) derart ausgebildet ist, in Abhängigkeit von Eingangsgrößen (E) ein Unterstützungsmoment (M_{Ü}) und ein Rückstellmoment (M_{R}) für den Servomotor (3) zu berechnen, wobei das Steuergerät (2) derart ausgebildet ist, dass bei einem Übersteuern des Kraftfahrzeugs eine Verstärkung des Rückstellmoments (M_{R}) in Abhängigkeit des Grades der Übersteuerung und eines Reibwertes (r) der Fahrbahnoberfläche angepasst wird und ein Offset-Winkel (Δ*ϕ*) zu einer Neutralstellung bestimmt wird, auf den die Rückstellung der Lenkung erfolgt.

2. Elektromechanische Lenkung nach Anspruch 1, **dadurch gekennzeichnet, dass** das Steuergerät (2) derart ausgebildet ist, dass bei einem Untersteuern des Kraftfahrzeugs eine Verstärkung (k') des Unterstützungsmoments (M_{Ü}) in Abhängigkeit des Grades der Untersteuerung und eines Reibwertes (r) der Fahrbahnoberfläche angepasst wird.

3. Elektromechanische Lenkung nach Anspruch 2, **dadurch gekennzeichnet, dass** das Steuergerät (2) derart ausgebildet ist, zusätzlich eine Verstärkung des Rückstellmoments (M_{R}) in Abhängigkeit des Grades der Untersteuerung und des Reibwertes (r) anzupassen.

4. Verfahren zum Steuern einer elektromechanischen Lenkung (1) für ein Kraftfahrzeug, mittels eines Steuergeräts (2) und eines elektrischen Servomotors (3), wobei das Steuergerät (2) in Abhängigkeit von Eingangsgrößen (E) ein Unterstützungsmoment (M_{Ü}) und ein Rückstellmoment (M_{R}) für den Servomotor (3) berechnet, **dadurch gekennzeichnet, dass** das Steuergerät (2) bei einem Übersteuern des Kraftfahrzeugs eine Verstärkung (k) des Rückstellmoments (M_{R}) in Abhängigkeit des Grades der Übersteuerung und eines Reibwertes (r) der Fahrbahnoberfläche anpasst und einen Offset-Winkel (Δ*ϕ*) zu einer Neutralstellung bestimmt, auf den die Rückstellung der Lenkung erfolgt.

5. Verfahren nach Anspruch 4, **dadurch gekennzeichnet, dass** das Steuergerät (2) bei einem Untersteuern des Kraftfahrzeugs eine Verstärkung (k') des Unterstützungsmoments (M_{Ü}) in Abhängigkeit des Grades der Untersteuerung und eines Reibwertes (r) der Fahrbahnoberfläche anpasst.

6. Verfahren nach Anspruch 5, **dadurch gekennzeichnet, dass** zusätzlich eine Verstärkung des Rückstellmoments (M_{R}) in Abhängigkeit des Grades der Untersteuerung und des Reibwertes (r) angepasst wird.

7. Verfahren nach einem der Ansprüche 4 bis 6, **dadurch gekennzeichnet, dass** das Signal für das Über- oder Untersteuern und der Reibwert (r) der Fahrbahnoberfläche von einem elektronischen Stabilitätsprogramm (5) an das Steuergerät (2) übermittelt werden.

8. Verfahren nach Anspruch 7, **dadurch gekennzeichnet, dass** das Über- oder Untersteuern aus einer Gierratendifferenz (Δ*ψ̇*) ermittelt wird.

## Claims

1. Electromechanical steering system (1) for a motor vehicle, comprising at least one control device (2) and an electric servo motor (3), wherein the control device (2) is designed to calculate an assistance torque (M_{Ü}) and a resetting torque (M_{R}) for the servo motor (3) as a function of input variables (E), wherein the control device (2) is embodied in such a way that in the case of oversteering of the motor vehicle amplification of the resetting torque (M_{R}) is adapted as a function of the degree of oversteering and of a coefficient of friction (r) of the carriageway surface, and an offset angle (Δ_{ϕ}) with respect to a neutral position, to which angle the steering system is reset, is determined.

2. Electromechanical steering system according to Claim 1, **characterized in that** the control device (2) is embodied in such a way that in the case of understeering of the motor vehicle amplification (k') of the assistance torque (M_{Ü}) is adapted as a function of the degree of understeering and of a coefficient of friction (r) of the carriageway surface.

3. Electromechanical steering system according to Claim 2, **characterized in that** the control device (2) is designed additionally to adapt amplification of the resetting torque (M_{R}) as a function of the degree of understeering and of the coefficient of friction (r).

4. Method for controlling an electromechanical steering system (1) for a motor vehicle by means of a control device (2) and an electric servo motor (3), wherein the control device (2) calculates an assistance torque (M_{Ü}) and a resetting torque (M_{R}) for the servo motor (3) as a function of input variables (E),
**characterized in that** in the case of oversteering of the motor vehicle the control device (2) adapts amplification (k) of the resetting torque (M_{R}) as a function of the degree of oversteering and of a coefficient of friction (r) of the carriageway surface and determines an offset angle (Δ_{ϕ}) with respect to a neutral position, to which angle the steering system is reset.

5. Method according to Claim 4, **characterized in that** in the case of understeering of the motor vehicle the control device (2) adapts amplification (k') of the assistance torque (M_{Ü}) as a function of the degree of understeering and of a coefficient of friction (r) of the carriageway surface.

6. Method according to Claim 5, **characterized in that** in addition, amplification of the resetting torque (M_{R}) is adapted as a function of the degree of understeering and of the coefficient of friction (r) .

7. Method according to one of Claims 4 to 6, **characterized in that** the signal for the oversteering or understeering and the coefficient of friction (r) of the carriageway surface are transmitted from an electronic stability program (5) to the control device (2).

8. Method according to Claim 7, **characterized in that** the oversteering or understeering is determined from a yaw rate difference (Δ*ψ̇*).

## Revendications

1. Direction électromécanique (1) destinée à un véhicule automobile, comprenant au moins une unité de commande (2) et un servomoteur électrique (3), dans laquelle l'appareil de commande (2) est conçu de manière à calculer un couple d'assistance (MÜ) et un couple de rappel (MR) destinés au servomoteur (3) en fonction de grandeurs d'entrée (E), dans laquelle l'appareil de commande (2) est conçu de manière à ce qu'en cas de survirage du véhicule automobile, le couple de rappel (MR) soit amplifié en fonction du degré de survirage et d'un coefficient de frottement (r) du revêtement routier et un angle de décalage (*Δϕ*) vers une position neutre vers laquelle s'effectue le rappel de la direction est déterminé.

2. Direction électromécanique selon la revendication 1, **caractérisée en ce que** l'appareil de commande (2) est conçu de manière à ce que, lorsque le véhicule automobile subit un sous-virage, une amplification (k') du couple d'assistance (MÜ) soit adaptée en fonction du degré de sous-virage et du coefficient de frottement (r) du revêtement routier.

3. Direction électromécanique selon la revendication 2, **caractérisée en ce que** l'appareil de commande (2) est conçu de manière à régler en outre une amplification du couple de rappel (MR) en fonction du degré de sous-virage et du coefficient de frottement (r).

4. Procédé de commande d'une direction électromécanique (1) destinée à un véhicule automobile au moyen d'un appareil de commande (2) et d'un servomoteur électrique (3), dans lequel l'appareil de commande (2) calcule un couple d'assistance (MÜ) et un couple de rappel (MR) destinés au servomoteur (3) en fonction de grandeurs d'entrée (E),
**caractérisé en ce que**, lorsque le véhicule automobile subit un survirage, l'appareil de commande (2) adapte une amplification (k) du couple de rappel (MR) en fonction du degré de survirage et d'un coefficient de frottement (r) du revêtement routier et détermine un angle de décalage (*Δϕ*) vers une position neutre vers laquelle s'effectue le rappel de la direction.

5. Procédé selon la revendication 4, **caractérisé en ce que**, lorsque le véhicule automobile subit un sous-virage, l'appareil de commande (2) adapte une amplification (k') du couple d'assistance (MÜ) en fonction du degré de sous-virage et d'un coefficient de frottement (r) du revêtement routier.

6. Procédé selon la revendication 5, **caractérisé en ce qu'**une amplification du couple de rappel (MR) est en outre adaptée en fonction du degré de sous-virage et du coefficient de frottement (r).

7. Procédé selon l'une des revendications 4 à 6, **caractérisé en ce que** le signal de survirage ou de sous-virage et le coefficient de frottement (r) du revêtement routier sont transmis par un programme de stabilité électronique (5) à l'appareil de commande (2).

8. Procédé selon la revendication 7, **caractérisé en ce que** le survirage ou le sous-virage est déterminé à partir d'une différence de vitesse de lacet (Δ*ψ̇*).
